(19) **Europäisches Patentamt / European Patent Office / Office européen des brevets**

(11) **EP 4 681 980 A1**

(12) **EUROPEAN PATENT APPLICATION**
published in accordance with Art. 153(4) EPC

(43) Date of publication:
**21.01.2026 Bulletin 2026/04**

(21) Application number: **23927521.7**

(22) Date of filing: **16.03.2023**

(51) International Patent Classification (IPC):
***B60L 53/60*** *(2019.01)*

(52) Cooperative Patent Classification (CPC):
**B60L 53/60**

(86) International application number:
**PCT/JP2023/010341**

(87) International publication number:
**WO 2024/189902 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pioneer Corporation**
**Tokyo 113-0021 (JP)**

(72) Inventors:
• **NAKAMOTO, Shogo**
**Tokyo 113-0021 (JP)**
• **OGAWA, Keisuke**
**Tokyo 113-0021 (JP)**
• **HIJIKATA, Makoto**
**Tokyo 113-0021 (JP)**
• **FUKUSHIMA, Norihiko**
**Kawagoe-shi, Saitama 350-8555 (JP)**
• **MATSUMOTO, Reiji**
**Kawagoe-shi, Saitama 350-8555 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57)  An information processing apparatus (100) includes an acquisition unit (121) that acquires information regarding an arbitrary point or an arbitrary area and information regarding the number of electric vehicles, a generation unit (122) that generates a reachable range of the electric vehicle with predetermined power based on the information regarding the arbitrary point or the arbitrary area acquired by the acquisition unit (121); and a prediction unit (123) that predicts a demand for a charging spot at the arbitrary point or in the arbitrary area based on the information regarding the number of electric vehicles acquired by the acquisition unit (121) and the reachable range generated by the generation unit (122).

FIG.2

**Description**

Field

The present invention relates to an information processing apparatus, an information processing method, and an information processing program.

Background

Hitherto, there is a technology of acquiring position information of an electric vehicle, predicting a charging timing and a charging position of the electric vehicle by using the position information and charging state information, and predicting a load applied to a system (for example, Patent Literature 1).

Citation List

Patent Literature

Patent Literature 1: JP 2014-42383 A

Summary

Technical Problem

However, in the related art, it is not possible to present information required when a charging spot is newly installed. For example, a demand at an arbitrary position is not predicted. As described above, examples of a problem to be solved by the present invention include the above-described problem.

Solution to Problem

An information processing apparatus according to claim 1 includes an acquisition unit that acquires information regarding an arbitrary point or an arbitrary area and information regarding the number of electric vehicles, a generation unit that generates a reachable range of the electric vehicle with predetermined power based on the information regarding the arbitrary point or the arbitrary area acquired by the acquisition unit, and a prediction unit that predicts a demand for a charging spot at the arbitrary point or in the arbitrary area based on the information regarding the number of electric vehicles acquired by the acquisition unit and the reachable range generated by the generation unit.

An information processing method according to claim 7 is executed by a computer, the information processing method comprising: an acquisition process of acquiring information regarding an arbitrary point or an arbitrary area and information regarding the number of electric vehicles; a generation process of generating a reachable range of the electric vehicle with predetermined power based on the information regarding the arbitrary point or the arbitrary area acquired in the acquisition process; and a prediction process of predicting a demand for a charging spot at the arbitrary point or in the arbitrary area based on the information regarding the number of electric vehicles acquired in the acquisition process and the reachable range generated in the generation process.

An information processing program according to claim 8 is executed by an information processing apparatus to execute a process, the process includes an acquisition step of acquiring information regarding an arbitrary point or an arbitrary area and information regarding the number of electric vehicles; a generation step of generating a reachable range of the electric vehicle with predetermined power based on the information regarding the arbitrary point or the arbitrary area acquired in the acquisition step; and a prediction step of predicting a demand for a charging spot at the arbitrary point or in the arbitrary area based on the information regarding the number of electric vehicles acquired in the acquisition step and the reachable range generated in the generation step.

Brief Description of Drawings

FIG. 1 is a diagram illustrating a configuration of an information processing apparatus system according to an embodiment.
FIG. 2 is a diagram illustrating a configuration of an information processing apparatus according to the embodiment.
FIG. 3 is a view illustrating generation processing by the information processing apparatus according to the embodiment.

FIG. 4 is a view illustrating the generation processing by the information processing apparatus according to the embodiment.

FIG. 5 is a view illustrating prediction processing by the information processing apparatus according to the embodiment.

FIG. 6 is a view illustrating the prediction processing by the information processing apparatus according to the embodiment.

FIG. 7 is a view illustrating the prediction processing by the information processing apparatus according to the embodiment.

FIG. 8 is a view illustrating the prediction processing by the information processing apparatus according to the embodiment.

FIG. 9 is a flowchart illustrating an example of processing by the information processing apparatus according to the embodiment.

FIG. 10 is a hardware configuration diagram illustrating an example of a computer that implements functions of the information processing apparatus. Description of Embodiments

Hereinafter, modes for carrying out the present invention (embodiments) will be described with reference to the drawings. Note that the present invention is not limited by the embodiments described below. Furthermore, in the description of the drawings, the same portions are denoted by the same reference signs.

[1. Configuration of Information Processing System]

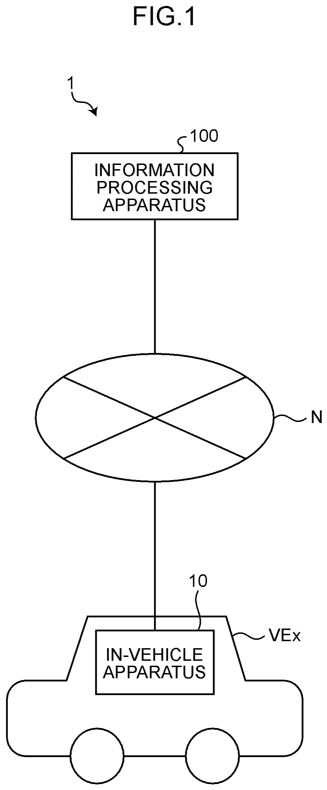

First, a configuration of an information processing system according to an embodiment will be described with reference to FIG. 1. FIG. 1 is a diagram illustrating the configuration of the information processing system according to the embodiment. FIG. 1 illustrates an information processing system 1 as an example of the information processing system according to the embodiment.

As illustrated in FIG. 1, the information processing system 1 may include an in-vehicle apparatus 10 and an information processing apparatus 100. In addition, the in-vehicle apparatus 10 and the information processing apparatus 100 are connected to communicate with each other in a wired or wireless manner via a network N. Furthermore, the information processing system 1 illustrated in FIG. 1 may include an arbitrary number of in-vehicle apparatuses 10 and an arbitrary number of information processing apparatuses 100.

The in-vehicle apparatus 10 may be a dedicated sensor device built in or externally attached to a vehicle VEx, or may be an apparatus such as a recording apparatus (drive recorder) installed in the vehicle VEx for crime prevention or a countermeasure for tailgating.

Further, the in-vehicle apparatus 10 may include a sensor device and a notification device. As an example, the in-vehicle apparatus 10 may be a combined apparatus in which independent sensor devices and notification devices are communicably connected to each other. Furthermore, as another example, the in-vehicle apparatus 10 may be one apparatus having a sensor function and a notification function.

Furthermore, a user can substitute a predetermined sensor for the in-vehicle apparatus 10 by connecting the predetermined sensor to a portable terminal apparatus (for example, a smartphone, a tablet terminal, a notebook personal computer (PC), a desktop PC, or a personal digital assistant (PDA)) used on a daily basis and introducing a predetermined application. For example, the portable terminal apparatus which includes the predetermined sensor or to which the predetermined sensor is connected can be understood as the in-vehicle apparatus 10 referred to herein. In a case where the portable terminal apparatus is used as the in-vehicle apparatus 10, for example, the portable terminal apparatus is installed on a dashboard or the like of the vehicle VEx during driving.

Further, the in-vehicle apparatus 10 may include various sensors. For example, the in-vehicle apparatus 10 may include various sensors such as a global navigation satellite system (GNSS) sensor, a global positioning system (GPS), an acceleration sensor, a gyro sensor, a camera, and an atmospheric pressure sensor.

The information processing apparatus 100 may acquire various types of data based on sensor information detected by the sensors (for example, by analyzing the sensor information). For example, the information processing apparatus 100 acquires position information from the GNSS sensor. Furthermore, for example, the information processing apparatus 100 acquires an angular velocity from the gyro sensor. Furthermore, for example, the information processing apparatus 100 acquires data of a moving image obtained by imaging the outside from the inside of the vehicle VEx using the camera. The information processing apparatus 100 may acquire the sensor information detected by not only a sensor included in the in-vehicle apparatus 10 but also a sensor included in the vehicle VEx itself.

The information processing apparatus 100 is an apparatus that predicts a demand for a charging spot. For example, the information processing apparatus 100 acquires information regarding an arbitrary point or an arbitrary area and information regarding the number of electric vehicles, generates a reachable range of the electric vehicle with predetermined power based on the information regarding the arbitrary point or the arbitrary area, and predicts the demand for the charging spot at the arbitrary point or the arbitrary area based on the information regarding the number of electric vehicles and the reachable range.

Here, if the in-vehicle apparatus 10 is an edge computer that performs edge processing near the user, the information processing apparatus 100 may be, for example, a cloud computer that performs processing on a cloud side. That is, the information processing apparatus 100 may be a server apparatus.

Furthermore, in the following embodiment, an example in which information processing according to the embodiment is implemented in the information processing system 1 by performing information transmission and reception between the in-vehicle apparatus 10 and the information processing apparatus 100 is illustrated. However, the information processing according to the embodiment may be implemented only on an edge side, that is, the in-vehicle apparatus 10. In this case, the in-vehicle apparatus 10 may be configured to behave like the information processing apparatus 100 by an information processing program according to the embodiment, for example.

[2. Configuration of Information Processing Apparatus]

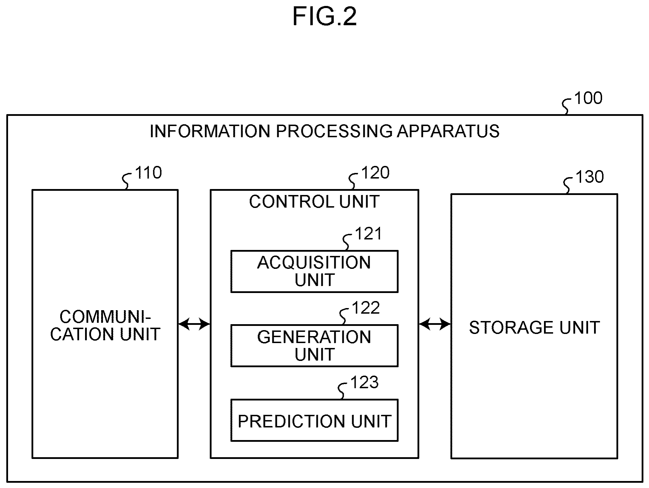

First, the information processing apparatus 100 according to the embodiment will be described with reference to FIG. 2. FIG. 2 is a diagram illustrating a configuration example of the information processing apparatus 100 according to the embodiment. As illustrated in FIG. 2, the information processing apparatus 100 includes a communication unit 110, a storage unit 130, and a control unit 120. Hereinafter, each unit included in the information processing apparatus 100 will be described.

The communication unit 110 is implemented by, for example, a network interface card (NIC). The communication unit 110 is connected to the network N in a wired or wireless manner, and transmits and receives information to and from the in-vehicle apparatus 10, for example.

The storage unit 130 is implemented by, for example, a semiconductor memory element such as a random access memory (RAM) or a flash memory, or a storage device such as a hard disk or an optical disk. The storage unit 130 stores information such as the information regarding the arbitrary point or the arbitrary area, the information regarding the number of electric vehicles, vehicle information, information regarding the charging spot, other information necessary for generating the reachable range, other information necessary for estimating power consumption, and other information necessary for predicting the demand for the charging spot.

Here, the information regarding the arbitrary point or the arbitrary area includes the position information such as latitude and longitude or an address indicating the arbitrary point or the arbitrary area. The arbitrary area may be an area specified by an arbitrary figure or the like. In addition, the information regarding the number of electric vehicles includes information such as the number of electric vehicles traveling on each road, the number of registered electric vehicles, the number of automobiles, and a ratio of the electric vehicles. In addition, the vehicle information includes information such as a vehicle type and a vehicle model. In addition, the information regarding the charging spot includes information such as a location of the charging spot and the number of charging spots. The above information is an example, and the storage unit 130 may store information other than the above.

The control unit 120 is implemented by using a central processing unit (CPU), a network processor (NP), a field programmable gate array (FPGA), or the like, and executes a processing program stored in a memory. As illustrated in FIG. 2, the control unit 120 includes an acquisition unit 121, a generation unit 122, and a prediction unit 123. Hereinafter, each unit included in the control unit 120 will be described.

The acquisition unit 121 acquires the information regarding the arbitrary point or the arbitrary area and the information regarding the number of electric vehicles. For example, the acquisition unit 121 acquires the latitude and longitude of the arbitrary point and the information regarding the number of electric vehicles. Specifically, the acquisition unit 121 acquires information regarding latitude and longitude "24.2867 153.9807" of Tokyo Station and the information regarding the number of electric vehicles traveling on each road.

In addition, for example, the acquisition unit 121 acquires the address of the arbitrary area and the information regarding the number of electric vehicles. Specifically, the acquisition unit 121 acquires information regarding an address "Itabashi-ku, Tokyo" of Itabashi-ku and the information regarding the number of electric vehicles traveling on each road.

In addition, the acquisition unit 121 acquires the information regarding the arbitrary point or the arbitrary area, the information regarding the number of electric vehicles, and the information regarding the charging spot. For example, the acquisition unit 121 acquires the information regarding the arbitrary point or the arbitrary area, the information regarding the number of electric vehicles, and the information regarding the number of the charging spots and the location of the charging spot. Specifically, the acquisition unit 121 acquires the information regarding the address "Itabashi-ku, Tokyo" of Itabashi-ku, the information regarding the number of electric vehicles traveling on each road, the number of charging spots of "XXX", and the information regarding the location of each charging spot.

The acquisition unit 121 acquires the ratio of the electric vehicles as the information regarding the number of electric vehicles. For example, the acquisition unit 121 acquires the information regarding the arbitrary point and the information regarding the ratio of the electric vehicles. Specifically, the acquisition unit 121 acquires information regarding latitude and longitude "XX.XXXX XXX.XXXX" of the arbitrary point and a ratio "XX%" of the electric vehicles relative to all the automobiles.

The generation unit 122 generates the reachable range of the electric vehicle with predetermined power based on the information regarding the arbitrary point or the arbitrary area acquired by the acquisition unit 121. Here, the reachable range generated by the generation unit 122 may be an arbitrary figure corresponding to a purpose, such as a circle or a quadrangle, including or centered on the arbitrary point or the arbitrary area, and can be generated for each predetermined power.

For example, the generation unit 122 generates the reachable range of the electric vehicle with the predetermined power, the reachable range being centered on the arbitrary point acquired by the acquisition unit 121. Specifically, the generation unit 122 searches for predetermined points and a predetermined section such that a cumulative total of estimated power consumption in the predetermined section connecting the predetermined points on a route with the arbitrary point or the arbitrary area as a start point is minimized in all routes through which the electric vehicle can move from the arbitrary point or the arbitrary area acquired by the acquisition unit 121. Then, the generation unit 122 generates, as the reachable range of a moving body, a predetermined range in which the cumulative total of the estimated power consumption is within a predetermined battery capacity range of the electric vehicle in all the routes through which the electric vehicle can move from the arbitrary point or the arbitrary area. A specific example of generation processing by the generation unit 122 will be described in [3. Generation Processing].

The generation unit 122 generates the reachable range of the electric vehicle with the predetermined power based on power consumption estimation by using the information regarding the arbitrary point or the arbitrary area acquired by the acquisition unit 121. For example, the generation unit 122 estimates the power consumption based on the information regarding the arbitrary point or the arbitrary area acquired by the acquisition unit 121, and uses the estimation result to generate the reachable range of the electric vehicle with the predetermined power.

More specifically, the generation unit 122 calculates a speed of the vehicle traveling on a road link from road link information included in the information regarding the arbitrary point or the arbitrary area acquired by the acquisition unit 121, estimates power consumption in the road link based on the estimated speed, and generates the reachable range of the electric vehicle with the predetermined power by using the estimation result.

The prediction unit 123 predicts the demand for the charging spot at the arbitrary point or in the arbitrary area based on the information regarding the number of electric vehicles acquired by the acquisition unit 121 and the reachable range generated by the generation unit 122. For example, the prediction unit 123 predicts the demand for the charging spot at the arbitrary point or in the arbitrary area by using the information regarding the number of electric vehicles acquired by the acquisition unit 121 and the reachable range generated by the generation unit 122. A specific example of prediction processing by the prediction unit 123 will be described in [4. Prediction Processing].

In addition, the prediction unit 123 predicts the demand for the charging spot at the arbitrary point or in the arbitrary area by using the information regarding the number of electric vehicles acquired by the acquisition unit 121, the reachable range generated by the generation unit 122, and the information regarding the charging spot. For example, the prediction unit 123 predicts the demand for the charging spot at the arbitrary point or in the arbitrary area by using the information regarding the number of electric vehicles acquired by the acquisition unit 121, the reachable range generated by the generation unit 122, and the information regarding the location of the charging spot and the number of charging spots.

In addition, the prediction unit 123 predicts the demand for the charging spot at the arbitrary point or in the arbitrary area by using the number of vehicles within the reachable range generated by the generation unit 122 and the power consumption. For example, the prediction unit 123 predicts the demand for the charging spot in the reachable range by multiplying information regarding the number of vehicles within the reachable range generated by the generation unit 122 by the estimated power consumption for traveling on each road within the reachable range.

In addition, the prediction unit 123 predicts the demand for the charging spot at the arbitrary point or in the arbitrary area by performing weighting according to a distance using the information regarding the number of electric vehicles acquired by the acquisition unit 121 and the reachable range generated by the generation unit 122. For example, the prediction unit 123 predicts the demand for the charging spot at the arbitrary point or in the arbitrary area by multiplying the power consumption estimated using the information regarding the number of electric vehicles acquired by the acquisition unit 121 and the reachable range generated by the generation unit 122 by a predetermined value corresponding to the distance.

[3. Generation Processing]

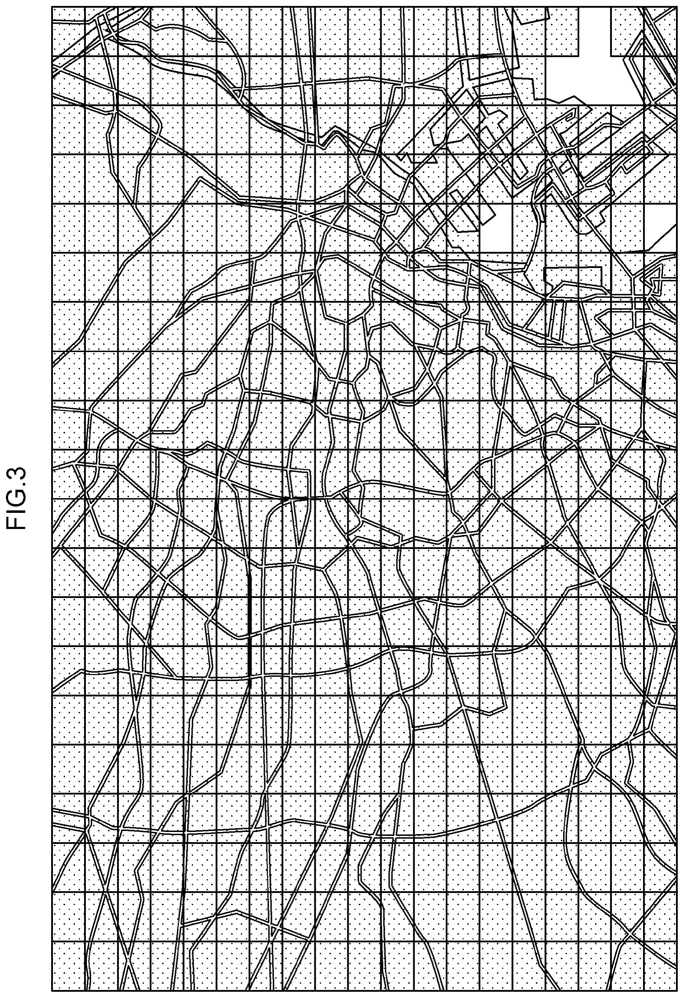

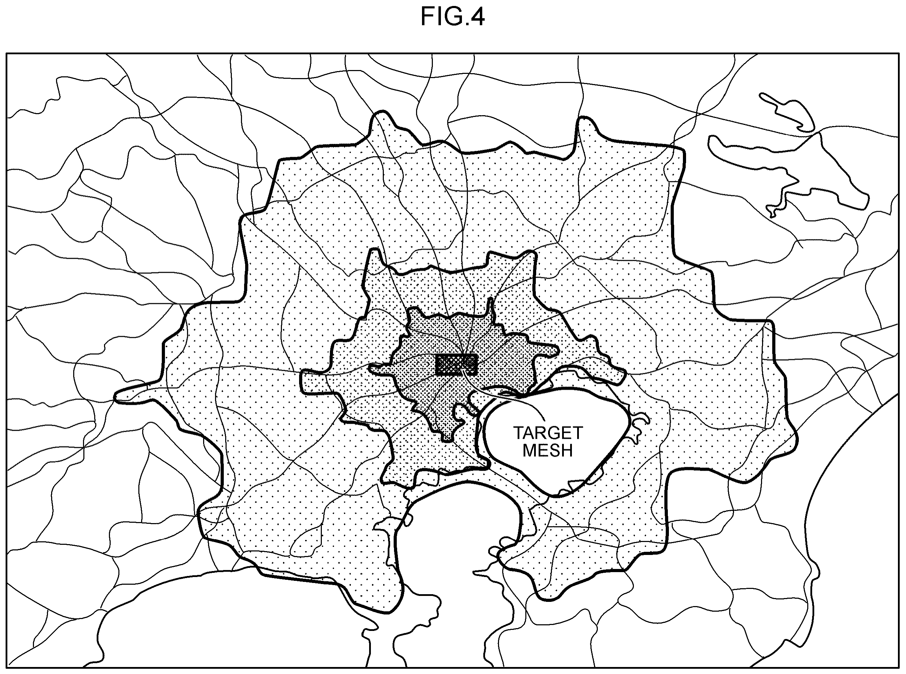

Next, the generation processing performed by the information processing apparatus 100 will be described with reference to FIGS. 3 and 4. FIGS. 3 and 4 are views illustrating the generation processing by the information processing apparatus 100 according to the embodiment.

First, the generation unit 122 divides a region including the arbitrary point or the arbitrary area acquired by the acquisition unit 121 into predetermined segments. For example, as illustrated in FIG. 3, the generation unit 122 divides a target region centered on the arbitrary point into third-order regional meshes.

Subsequently, the generation unit 122 designates a battery capacity to be used for generation of the reachable range. For example, the generation unit 122 designates a battery capacity of a specific vehicle model as the battery capacity used for generation of the reachable range. In the designation of the battery capacity, any battery capacity corresponding to the purpose may be designated in addition to the battery capacity of the specific vehicle model.

Then, the generation unit 122 generates the reachable range by using the center of each divided segment as a charging spot installation point. For example, the generation unit 122 generates the reachable range of the electric vehicle with the predetermined power based on the power consumption estimation by using the center of a specific mesh among the third-order regional meshes as the charging spot installation point.

The power consumption can be estimated by, for example, the following Formula (1). Here, a1 and a2 in Formula (1) are constants set according to a situation of the moving body or the like. g is a gravitational acceleration. t is a required time for a target road section. v is a traveling speed. K1, K2, and K3 are parameters different for each vehicle model.

$$K1^* T + K2^* \sum \left[ (a(t) + g^* \sin(\theta))^* v(t) \right]$$
$$+ K3^* \sum \left[ (v(t)^3 + a1^* v(t)^2 + a2^* v(t)) \right] \qquad \cdots (1)$$

A first term indicates information regarding energy consumed when the moving body stops in a state in which a driving source is activated. The stop of the moving body in a state in which the driving source is activated is a state in which an engine of the moving body is idled at a low speed to such an extent that no load is applied to the engine. Specifically, the stop of the moving body in a state in which the driving source is activated is idling.

A second term indicates information regarding energy consumed/recovered at the time of acceleration/deceleration of the moving body and a change in potential energy. The acceleration/deceleration of the moving body is a traveling state in which a speed of the moving body changes with time. Specifically, the acceleration/deceleration of the moving body is a traveling state in which the speed of the moving body changes within a predetermined time. The predetermined time is a regular interval, and is, for example, a unit time.

A third term indicates information regarding energy consumed for a resistance generated at the time of traveling of the moving body. The traveling of the moving body is a traveling state in which the speed of the moving body is constant within a predetermined time. The resistance generated at the time of the traveling of the moving body is a factor that changes a traveling state of the moving body when the moving body travels. Specifically, the resistance generated at the time of the traveling of the moving body is a resistance generated in the moving body due to weather conditions, road conditions, vehicle conditions, or the like.

The generation unit 122 estimates the power consumption for each road section from various types of information by calculation using Formula (1).

Then, the generation unit 122 searches for the predetermined points and the predetermined section such that the cumulative total of the estimated power consumption in the predetermined section connecting the predetermined points on the route with the arbitrary point or the arbitrary area as the start point is minimized in all the routes through which the electric vehicle can move from the arbitrary point or the arbitrary area. Then, the generation unit 122 generates, as the reachable range of the moving body, the predetermined range in which the cumulative total of the estimated power consumption is within the predetermined battery capacity range of the electric vehicle in all the routes through which the electric vehicle can move from the arbitrary point or the arbitrary area.

In addition, the generation unit 122 can generate the reachable range of the electric vehicle for each predetermined power. For example, as illustrated in FIG. 4, the generation unit 122 can generate a reachable range (primary reachable range) of the electric vehicle with power of 5 kWh, a reachable range (secondary reachable range) of the electric vehicle with power of 10 kWh, and a reachable range (tertiary reachable range) of the electric vehicle with a power of 20 kWh.

[4. Prediction Processing]

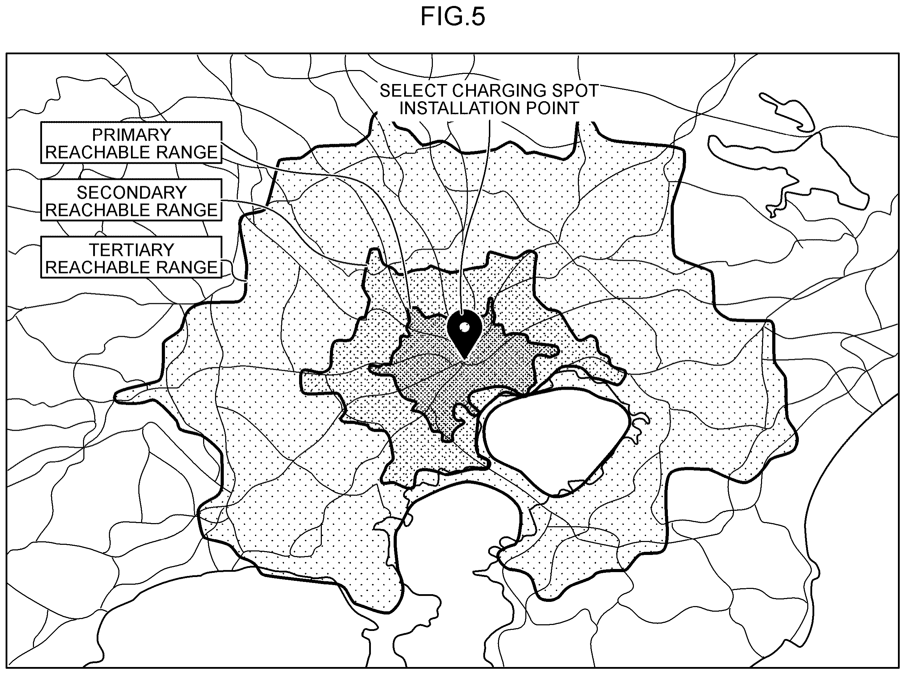

Next, the prediction processing performed by the information processing apparatus 100 will be described with reference to FIGS. 5 to 8. FIGS. 5 to 8 are views illustrating the prediction processing performed by the information processing apparatus 100.

In a case where the number of electric vehicles traveling on each road can be acquired by the acquisition unit 121, the prediction unit 123 calculates the power consumption within the reachable range by multiplying the number of electric vehicles within the reachable range generated by the generation unit 122 by a value of the power consumption during the traveling of the electric vehicle.

Here, in a case where the number of electric vehicles traveling on each road cannot be acquired, the prediction unit 123 first calculates the information regarding the number of electric vehicles included in the reachable range. For example, the prediction unit 123 calculates a ratio of the electric vehicles within the reachable range by dividing the number of registered electric vehicles within the reachable range by the number of all the registered automobiles within the reachable range.

Furthermore, for example, the prediction unit 123 calculates the number of electric vehicles included in the reachable range by multiplying a value obtained by multiplying the number of registered vehicles of a municipality included in the reachable range by the ratio of the electric vehicles by a value obtained by dividing a surface area of the reachable range by a surface area of the municipality included in the reachable range.

Subsequently, the prediction unit 123 calculates the power consumption within the reachable range. Here, in a case where information regarding a travel route of each electric vehicle and information regarding the power consumption can be acquired, the prediction unit 123 calculates the power consumption within the reachable range by integrating information regarding power consumed on each road on which each electric vehicle has traveled within the reachable range.

On the other hand, in a case where the information regarding the travel route of each electric vehicle and the power consumption cannot be acquired, the prediction unit 123 calculates the power consumption within the reachable range by estimation. For example, in a case where the power consumption is calculated for all roads, the prediction unit 123 estimates the power consumption in a case where a specific electric vehicle travels by using a power consumption rate estimated from information (latitude and longitude point cloud) of a traveling history within the reachable range. As a result, the prediction unit 123 can calculate the power consumption for the road, and thus, it is possible to calculate the power consumption within the reachable range by performing similar calculation for each road within the reachable range and summing the calculated values of the power consumption.

For example, in a case where the power consumption is not calculated for all the roads, the prediction unit 123 calculates the power consumption according to the following flow. First, the prediction unit 123 divides the reachable range into arbitrary regional meshes, and selects road link nodes closest to two diagonal points of the mesh.

Next, the prediction unit 123 performs a route search between the two road link nodes. Subsequently, the prediction unit 123 estimates, for example, the power consumption when one electric vehicle travels 1 km based on the route search result. Then, the prediction unit 123 calculates the power consumption in the mesh from the power consumption for the searched route, the number of vehicles traveling in the mesh, and a length of the road.

For example, in a case where the power consumption of one electric vehicle for traveling of 1 km is 0.16 kWh, there are three roads with a length of 1 km in the mesh, and five, three, or two vehicles travel on each road, the prediction unit 123 calculates the power consumption as $0.16 \times (5 \times 1 + 3 \times 1 + 2 \times 1) = 1.6$ kWh. The prediction unit 123 performs similar calculation for each mesh, and calculates the power consumption within the reachable range by summing.

Here, the power consumption of one electric vehicle for traveling of 1 km may be a value estimated for each vehicle model. For example, in a case where information regarding the vehicle model of the electric vehicle can be acquired, the prediction unit 123 performs the above calculation using a value of the power consumption of one electric vehicle corresponding to the vehicle model (for example, a small-sized vehicle, a full-sized vehicle, or a truck) of the electric vehicle for traveling of 1 km, and calculates the power consumption within the reachable range.

Then, the prediction unit 123 estimates the power consumption of the actual electric vehicle from the ratio of the electric vehicles and the estimated power consumption within the reaching range. For example, in a case where the ratio of the electric vehicles is 1% and the estimated power consumption is 1000 kWh, the estimated power consumption is predicted to be 10 kWh. At this time, the prediction unit 123 may treat the power consumption as a power demand.

Furthermore, the prediction unit 123 can further calculate the power demand by using information regarding the number of charging spots. For example, the power demand can be predicted by dividing the power consumption within the reachable range by a value obtained by adding 1 to the number of charging spots present in the reachable range. At this time, the power consumption may be calculated by distributing the power consumption by the number of chargers per charging spot.

The prediction unit 123 can perform the above processing for each reachable range. For example, the prediction unit 123 can predict the power demand for the primary reachable range, the secondary reachable range, and the tertiary reachable range, and predict the power demand for a specific range or using a total value.

For example, as illustrated in FIG. 5, when the prediction unit 123 estimates that the power consumption in the primary reachable range is 10 kWh, the power consumption in the secondary reachable range is 20 kWh, and the power consumption in the tertiary reachable range is 30 kWh, a total value of 60 kWh of the power consumption estimated in the respective reachable ranges is predicted as the power demand.

The prediction unit 123 can use weighting corresponding to the distance when summing the power demands of the respective reachable ranges. For example, the prediction unit 123 may predict an overall power demand by multiplying the power demand of the primary reachable range by 1.5, multiplying the power demand of the secondary reachable range by 1.0, multiplying the tertiary reachable range by 0.7, and summing the multiplied values of the respective power demands.

In addition, for example, the prediction unit 123 may predict an overall power demand by multiplying the power demand of the primary reachable range by 0.4, multiplying the power demand of the secondary reachable range by 1.0, multiplying the tertiary reachable range by 0.7, and summing the multiplied values of the respective power demands. As a value by which each power demand is multiplied, a predetermined value corresponding to the purpose can be used.

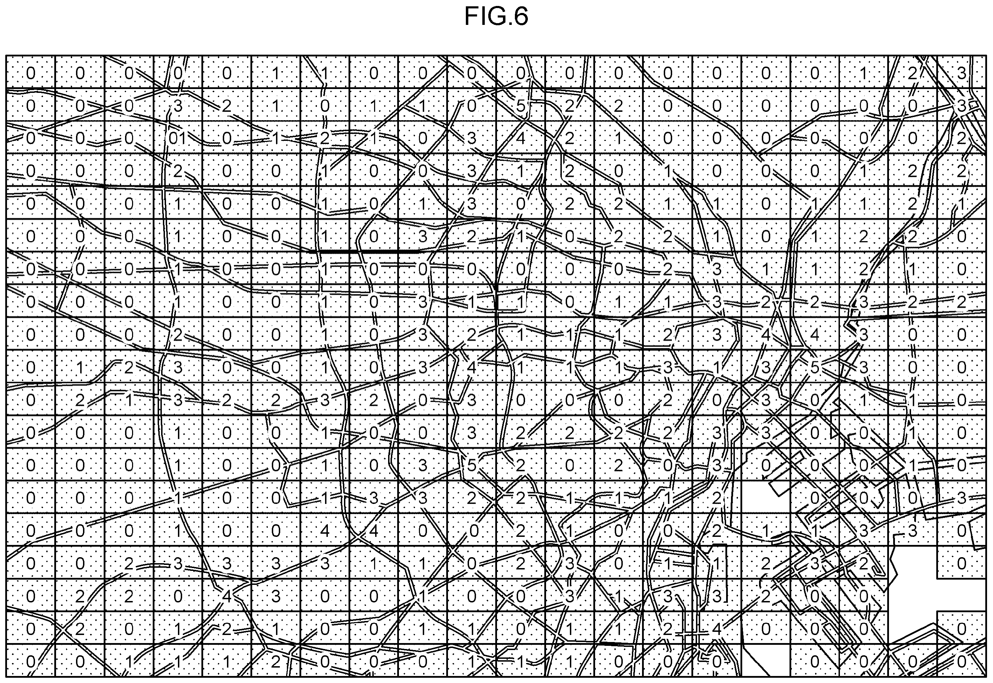

Thereafter, the prediction unit 123 performs similar calculation on all the meshes and maps the power demand for the charging spot on a map. For example, as illustrated in FIG. 6, the prediction unit 123 classifies a value obtained by integrating the power consumption of segments present in the reachable range from a target segment into a value of 0 to 5 by dividing the value in an arbitrary range, maps the value on the map, and displays the power demand for the charging spot.

At this time, the prediction unit 123 may further use information regarding a traffic volume or the charging spot. For example, the prediction unit 123 may perform predetermined weighting on the integrated value of the power consumption according to the traffic volume of the target segment. Furthermore, for example, the prediction unit 123 may perform predetermined weighting on the integrated value of the power consumption according to the number of charging spots present in the target segment.

Furthermore, for example, as illustrated in FIG. 6, the prediction unit 123 may divide the power demand for the charging spot in an arbitrary range, classify the power demand into a value of 0 to 5, map the value on the map, and display the power demand for the charging spot.

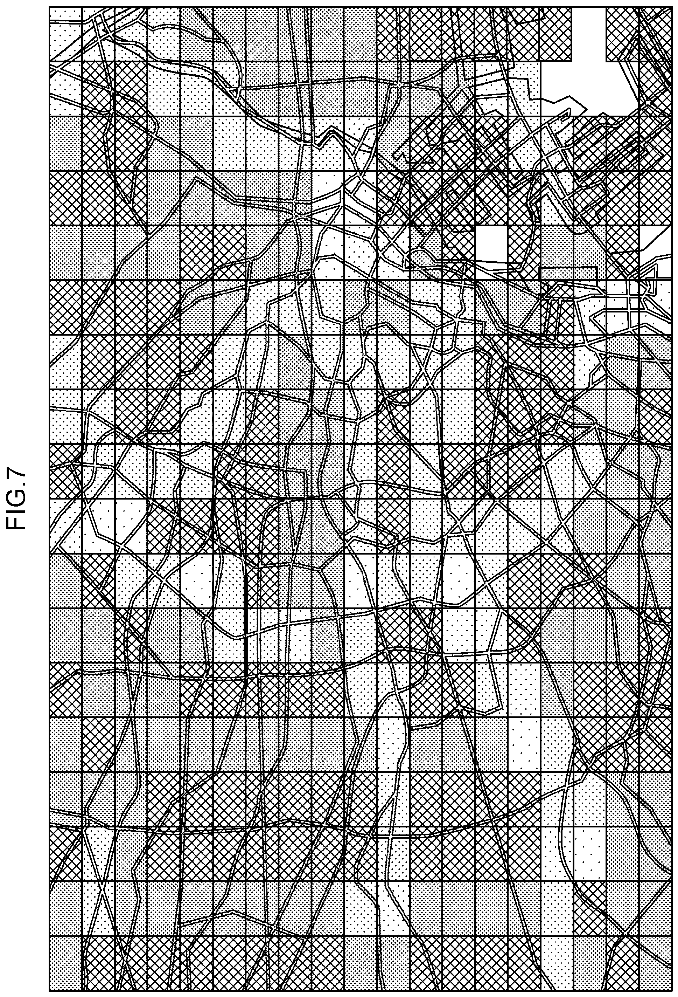

In addition, for example, as illustrated in FIG. 7, when mapping the integrated value of the power consumption on the map, the prediction unit 123 may color-code and display the value according to a magnitude of the integrated value of the power consumption. Furthermore, for example, as illustrated in FIG. 7, when mapping the power demand for the charging spot on the map, the prediction unit 123 may color-code and display the power demand for the charging spot according to a magnitude of the power demand for the charging spot. Here, the prediction unit 123 displays the power demand for the charging spot by using an arbitrary color or the like corresponding to the purpose.

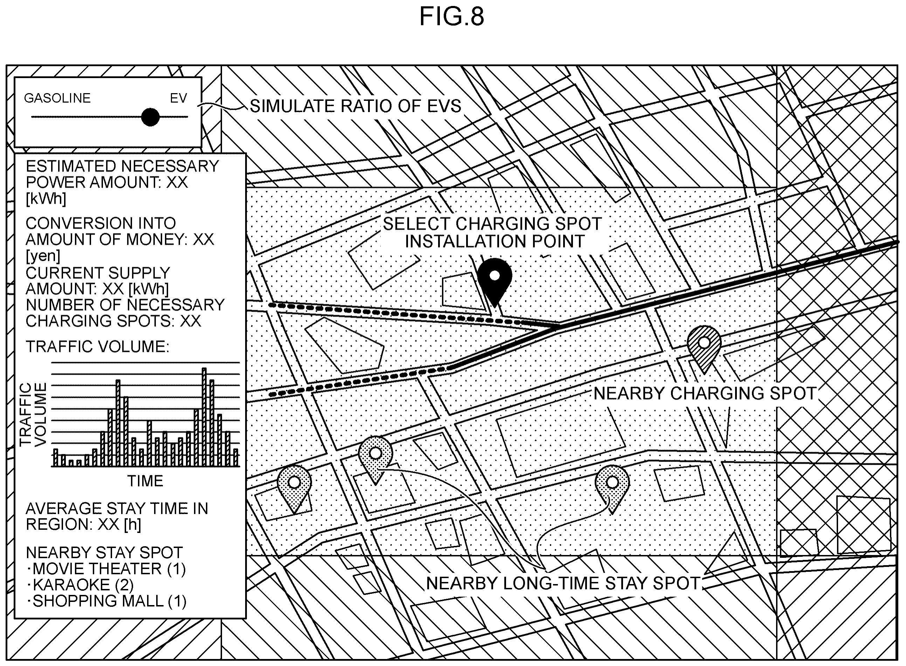

Furthermore, the prediction unit 123 may display accuracy of power demand prediction for each segment from an amount, precision, and granularity of data used for estimation. As illustrated in FIG. 8, the prediction unit 123 changes the ratio of the electric vehicles and displays the power demand in a case where the number of registered electric vehicles has increased. Further, the prediction unit 123 may predict and display the estimated power consumption (estimated necessary power amount) and a value obtained by converting the estimated necessary power amount into an amount of money as the power demand. In addition, an amount of power supplied from the charging spot in the mesh may be displayed as a current supply amount, and the number of necessary charging spots obtained from the estimated necessary power amount and the current supply amount may be displayed as the number of necessary charging spots. In addition, a 24-hour graph of the traffic volume on a road in the mesh, an average stay time indicating an average stay time in the mesh, and the number of stay spots in the mesh for each genre may be displayed. The 24-hour graph of the traffic volume, the average stay time, and the number of stay spots for each genre may be calculated in a form including a predetermined distance range or surrounding meshes.

[5. Flowchart]

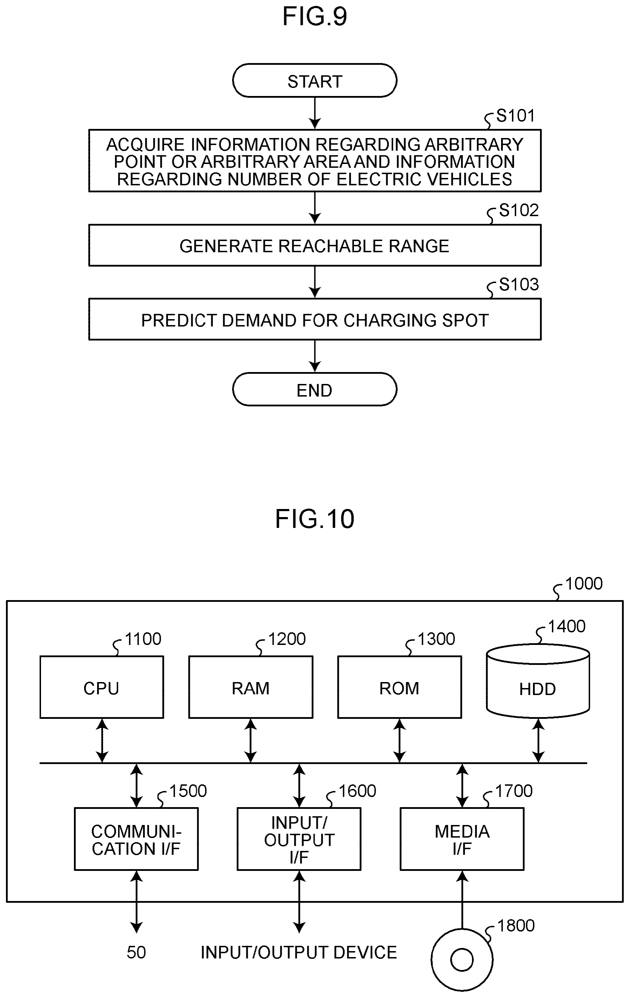

Next, processing by the information processing apparatus 100 having the above-described configuration will be described with reference to a flowchart of FIG. 9. The flowchart of FIG. 9 is mainly executed by the control unit 120. Furthermore, the flowchart can be configured as a program executed by the CPU included in the control unit 120, and the program can be used as the information processing program. The following steps S101 to S103 can be performed in different orders. In addition, there may be omitted processing among the following steps S101 to S103.

First, the acquisition unit 121 acquires the information regarding the arbitrary point or the arbitrary area and the information regarding the number of electric vehicles (step S101). For example, the acquisition unit 121 acquires the information regarding the arbitrary point and the information regarding the number of electric vehicles traveling on each road.

Next, the generation unit 122 generates the reachable range of the electric vehicle with the predetermined power based on the information regarding the arbitrary point or the arbitrary area acquired by the acquisition unit 121 (step S102). The generation unit 122 generates the reachable range of the electric vehicle with the predetermined power, the reachable range being centered on the arbitrary point acquired by the acquisition unit 121.

Then, the prediction unit 123 predicts the demand for the charging spot at the arbitrary point or in the arbitrary area based on the information regarding the number of electric vehicles acquired by the acquisition unit 121 and the reachable range generated by the generation unit 122 (step S103). For example, the prediction unit 123 predicts the demand for the charging spot at the arbitrary point or in the arbitrary area by using the information regarding the number of electric vehicles acquired by the acquisition unit 121 and the reachable range generated by the generation unit 122.

[6. Effects]

The information processing apparatus 100 according to the embodiment includes the acquisition unit 121 that acquires the information regarding the arbitrary point or the arbitrary area and the information regarding the number of electric vehicles, the generation unit 122 that generates the reachable range of the electric vehicle with the predetermined power based on the information regarding the arbitrary point or the arbitrary area acquired by the acquisition unit 121, and the prediction unit 123 that predicts the demand for the charging spot at the arbitrary point or in the arbitrary area based on the information regarding the number of electric vehicles acquired by the acquisition unit 121 and the reachable range generated by the generation unit 122.

As a result, the information processing apparatus 100 can predict the demand for the charging spot based on the information regarding the reachable range generated based on the information regarding the arbitrary point or the arbitrary area and the information regarding the number of electric vehicles to present information required when newly installing the charging spot.

The generation unit 122 of the information processing apparatus 100 according to the embodiment generates the reachable range of the electric vehicle with the predetermined power based on the power consumption estimation by using the information regarding the arbitrary point or the arbitrary area acquired by the acquisition unit 121.

As a result, the information processing apparatus 100 can predict the demand for the charging spot based on the information regarding the reachable range generated in consideration of an influence of each road on the power consumption and the information regarding the number of electric vehicles by using the information regarding the arbitrary point or the arbitrary area to present the information required when newly installing the charging spot.

The acquisition unit 121 of the information processing apparatus 100 according to the embodiment acquires the information regarding the arbitrary point or the arbitrary area, the information regarding the number of electric vehicles, and the information regarding the charging spot, and the prediction unit 123 predicts the demand for the charging spot at the arbitrary point or in the arbitrary area by using the information regarding the number of electric vehicles acquired by the acquisition unit 121, the reachable range generated by the generation unit 122, and the information regarding the charging spot.

As a result, the information processing apparatus 100 can predict the demand for the charging spot by using the information regarding the reachable range generated based on the information regarding the arbitrary point or the arbitrary area, the information regarding the number of electric vehicles, and the information regarding the charging spot to present the information required when newly installing the charging spot.

The prediction unit 123 of the information processing apparatus 100 according to the embodiment predicts the demand for the charging spot at the arbitrary point or in the arbitrary area by using the number of vehicles within the reachable range generated by the generation unit 122 and the power consumption.

As a result, the information processing apparatus 100 can predict the demand for the charging spot by using the number of vehicles present within the reachable range generated based on the information regarding the arbitrary point or the arbitrary area and the power consumption in a case where the vehicle travels on the road within the reachable range to present the information required when newly installing the charging spot.

The acquisition unit 121 of the information processing apparatus 100 according to the embodiment acquires the ratio of the electric vehicles as the information regarding the number of electric vehicles.

As a result, the information processing apparatus 100 can predict the demand for the charging spot based on the information regarding the reachable range generated based on the information regarding the arbitrary point or the arbitrary area and the information regarding the number of electric vehicles (the ratio of the electric vehicles) to present the information required when newly installing the charging spot.

The prediction unit 123 of the information processing apparatus 100 according to the embodiment predicts the demand for the charging spot at the arbitrary point or in the arbitrary area by performing weighting according to the distance using the information regarding the number of electric vehicles acquired by the acquisition unit 121 and the reachable range generated by the generation unit 122.

As a result, the information processing apparatus 100 can predict the demand for the charging spot by performing weighting according to the distance using the information regarding the reachable range generated based on the information regarding the arbitrary point or the arbitrary area and the information regarding the number of electric vehicles to present the information required when newly installing the charging spot.

[7. Hardware Configuration]

Furthermore, the information processing apparatus 100 according to the above-described embodiment is implemented by, for example, a computer 1000 having a configuration as illustrated in FIG. 10. FIG. 10 is a hardware configuration diagram illustrating an example of a computer that implements the functions of the information processing apparatus 100. The computer 1000 includes a CPU 1100, a RAM 1200, a read only memory (ROM) 1300, a hard disk drive (HDD) 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is activated, a program depending on hardware of the computer 1000, and the like.

The HDD 1400 stores a program to be executed by the CPU 1100, data to be used by the program, and the like. The communication interface 1500 receives data from another device via a predetermined communication network, sends the data to the CPU 1100, and transmits data generated by the CPU 1100 to another device via the predetermined communication network.

The CPU 1100 controls an output device such as a display or a printer and an input device such as a keyboard or a mouse via the input/output interface 1600. The CPU 1100 acquires data from the input device via the input/output interface 1600. In addition, the CPU 1100 outputs the generated data to the output device via the input/output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, in a case where the computer 1000 functions as the information processing apparatus 100 according to the embodiment, the CPU 1100 of the computer 1000 implements the functions of the control unit 120 by executing the program loaded on the RAM 1200. The CPU 1100 of the computer 1000 reads and executes the programs from the recording medium 1800, but as another example, the programs may be acquired from another device via the predetermined communication network.

[8. Others]

An example of the embodiment according to the present invention has been described above, but the present invention is not limited to the above embodiment. That is, those skilled in the art can make various modifications without departing from the gist of the present invention according to the known knowledge. As long as the information processing apparatus of the present invention is included in such a modification, the modification is naturally included in the scope of the present invention.

Reference Signs List

1      INFORMATION PROCESSING SYSTEM

10      IN-VEHICLE APPARATUS
100      INFORMATION PROCESSING APPARATUS
110      COMMUNICATION UNIT
120      CONTROL UNIT
121      ACQUISITION UNIT
122      GENERATION UNIT
123      PREDICTION UNIT
130      STORAGE UNIT

**Claims**

1. An information processing apparatus comprising:

   an acquisition unit that acquires information regarding an arbitrary point or an arbitrary area and information regarding the number of electric vehicles;
   a generation unit that generates a reachable range of the electric vehicle with predetermined power based on the information regarding the arbitrary point or the arbitrary area acquired by the acquisition unit; and
   a prediction unit that predicts a demand for a charging spot at the arbitrary point or in the arbitrary area based on the information regarding the number of electric vehicles acquired by the acquisition unit and the reachable range generated by the generation unit.

2. The information processing apparatus according to claim 1, wherein the generation unit generates the reachable range of the electric vehicle with the predetermined power based on power consumption estimation by using the information regarding the arbitrary point or the arbitrary area acquired by the acquisition unit.

3. The information processing apparatus according to claim 1, wherein the prediction unit predicts the demand for the charging spot at the arbitrary point or in the arbitrary area by using the number of vehicles within the reachable range generated by the generation unit and power consumption.

4. The information processing apparatus according to claim 1, wherein

the acquisition unit acquires the information regarding the arbitrary point or the arbitrary area, the information regarding the number of electric vehicles, and information regarding the charging spot, and
the prediction unit predicts the demand for the charging spot at the arbitrary point or in the arbitrary area by using the information regarding the number of electric vehicles acquired by the acquisition unit, the reachable range generated by the generation unit, and the information regarding the charging spot.

5. The information processing apparatus according to claim 1, wherein the acquisition unit acquires a ratio of the electric vehicles as the information regarding the number of electric vehicles.

6. The information processing apparatus according to claim 1, wherein the prediction unit predicts the demand for the charging spot at the arbitrary point or in the arbitrary area by performing weighting according to a distance using the information regarding the number of electric vehicles acquired by the acquisition unit and the reachable range generated by the generation unit.

7. An information processing method executed by a computer, the information processing method comprising:

an acquisition process of acquiring information regarding an arbitrary point or an arbitrary area and information regarding the number of electric vehicles;
a generation process of generating a reachable range of the electric vehicle with predetermined power based on the information regarding the arbitrary point or the arbitrary area acquired in the acquisition process; and
a prediction process of predicting a demand for a charging spot at the arbitrary point or in the arbitrary area based on the information regarding the number of electric vehicles acquired in the acquisition process and the reachable range generated in the generation process.

8. An information processing program that causes a computer to execute:

an acquisition step of acquiring information regarding an arbitrary point or an arbitrary area and information regarding the number of electric vehicles;
a generation step of generating a reachable range of the electric vehicle with predetermined power based on the information regarding the arbitrary point or the arbitrary area acquired in the acquisition step; and
a prediction step of predicting a demand for a charging spot at the arbitrary point or in the arbitrary area based on the information regarding the number of electric vehicles acquired in the acquisition step and the reachable range generated in the generation step.

# FIG.1

# FIG.2

FIG.3

FIG.4

TARGET
MESH

# FIG.5

SELECT CHARGING SPOT
INSTALLATION POINT

PRIMARY
REACHABLE RANGE

SECONDARY
REACHABLE RANGE

TERTIARY
REACHABLE RANGE

EP 4 681 980 A1

FIG.6

EP 4 681 980 A1

FIG.7

**FIG.8**

# FIG.9

```
        ┌─────────────┐
        │    START    │
        └─────────────┘
               │
               ▼                                    ⌐S101
┌──────────────────────────────────────────────┐
│  ACQUIRE INFORMATION REGARDING ARBITRARY       │
│  POINT OR ARBITRARY AREA AND INFORMATION       │
│  REGARDING NUMBER OF ELECTRIC VEHICLES         │
└──────────────────────────────────────────────┘
               │
               ▼                                    ⌐S102
┌──────────────────────────────────────────────┐
│           GENERATE REACHABLE RANGE             │
└──────────────────────────────────────────────┘
               │
               ▼                                    ⌐S103
┌──────────────────────────────────────────────┐
│        PREDICT DEMAND FOR CHARGING SPOT        │
└──────────────────────────────────────────────┘
               │
               ▼
        ┌─────────────┐
        │     END     │
        └─────────────┘
```

# FIG.10

```
                                                          ⌐1000
┌──────────────────────────────────────────────────────────────┐
│      ⌐1100          ⌐1200          ⌐1300          ⌐1400        │
│  ┌─────────┐    ┌─────────┐    ┌─────────┐    ┌─────────┐      │
│  │   CPU   │    │   RAM   │    │   ROM   │    │   HDD   │      │
│  └─────────┘    └─────────┘    └─────────┘    └─────────┘      │
│       ▲              ▲              ▲              ▲           │
│       ▼              ▼              ▼              ▼           │
│  ─────┼──────────────┼──────────────┼──────────────┼──────    │
│       ▲              ▲              ▲                          │
│       │  ⌐1500       │  ⌐1600       │  ⌐1700                   │
│       ▼              ▼              ▼                          │
│  ┌─────────┐    ┌─────────┐    ┌─────────┐                    │
│  │COMMUNI- │    │ INPUT/  │    │  MEDIA  │                    │
│  │CATION I/F│   │ OUTPUT  │    │   I/F   │                    │
│  │         │    │  I/F    │    │         │                    │
│  └─────────┘    └─────────┘    └─────────┘                    │
│       ▲              ▲              ▲                          │
└───────┼──────────────┼──────────────┼───────────────────────┘
        ▼              ▼              ▼  ⌐1800
       50      INPUT/OUTPUT DEVICE    ◎
```

## INTERNATIONAL SEARCH REPORT

| International application No. |
|---|
| **PCT/JP2023/010341** |

### A. CLASSIFICATION OF SUBJECT MATTER

**B60L 53/60**(2019.01)i
FI: B60L53/60

According to International Patent Classification (IPC) or to both national classification and IPC

### B. FIELDS SEARCHED

Minimum documentation searched (classification system followed by classification symbols)

B60L53/60; H02J13/00; G01C21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2017/0228840 A1 (XEROX CORPORATION) 10 August 2017 (2017-08-10) paragraphs [0035]-[0097], fig. 1-4 | 1-8 |
| A | WO 2017/022010 A1 (NISSAN MOTOR CO., LTD.) 09 February 2017 (2017-02-09) paragraphs [0010]-[0048], fig. 1-4F | 1-8 |
| A | JP 2012-99094 A (HITACHI, LTD.) 24 May 2012 (2012-05-24) paragraphs [0015]-[0037], fig. 1-6 | 1-8 |
| A | WO 2013/084931 A1 (HITACHI AUTOMOTIVE SYSTEMS, LTD.) 13 June 2013 (2013-06-13) paragraphs [0037]-[0087], [0159]-[0175], fig. 1-4B, 14 | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/010341**

| Patent document cited in search report | | | Publication date (day/month/year) | Patent family member(s) | | | Publication date (day/month/year) |
|---|---|---|---|---|---|---|---|
| US | 2017/0228840 | A1 | 10 August 2017 | (Family: none) | | | |
| WO | 2017/022010 | A1 | 09 February 2017 | (Family: none) | | | |
| JP | 2012-99094 | A | 24 May 2012 | US paragraphs [0024]-[0046], fig. 1-6 CN | 2012/0083932 102442218 | A1 A | |
| WO | 2013/084931 | A1 | 13 June 2013 | US paragraphs [0055]-[0105], [0176]-[0192], fig. 1-4B, 14 EP CN | 2014/0303826 2789977 104024800 | A1 A1 A | |

Form PCT/ISA/210 (patent family annex) (January 2015)

**EP 4 681 980 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014042383 A